# EUROPEAN PATENT SPECIFICATION

(11) **EP 2 733 323 B1**
(45) Date of publication and mention of the grant of the patent: **11.03.2015**
(21) Application number: 13193078.6
(22) Date of filing: 15.11.2013
(51) Int. Cl.: F01N 11/00

(54) **Filter abnormality determining device**
Vorrichtung zur Feststellung einer Filteranomalie
Dispositif de détermination d'une anomalie de filtre

(30) Priority: 15.11.2012 JP 2012251374
(43) Date of publication of application: 21.05.2014
(73) Proprietor: Toyota Jidosha Kabushiki Kaisha, Toyota-shi, Aichi-ken 471-8571 (JP)
(72) Inventor: Kidokoro, Toru, Toyota-shi, Aichi-ken, 471-8571 (JP); Hagimoto, Taiga, Toyota-shi, Aichi-ken, 471-8571 (JP); Takaoka, Kazuya, Toyota-shi, Aichi-ken, 471-8571 (JP); Matsumoto, Arifumi, Toyota-shi, Aichi-ken, 471-8571 (JP); Nishijima, Yamato, Toyota-shi, Aichi-ken, 471-8571 (JP); Terui, Yuki, Toyota-shi, Aichi-ken, 471-8571 (JP); Uozumi, Akifumi, Toyota-shi, Aichi-ken, 471-8571 (JP)
(74) Representative: Intès, Didier Gérard André

(56) References cited:
- EP-A1- 1 541 829
- JP-A- 2006 316 746
- JP-A- 2009 103 043

## Description

### TECHNICAL FIELD

The present invention relates to a filter abnormality determining device.

### BACKGROUND ART

An abnormality of a filter that collects particulate matters (hereinafter referred to as PM) in exhaust gas can be determined using a differential pressure sensor that detects a differential pressure between an upstream side and a downstream side of the filter (hereinafter also referred to as differential pressure across the filter). For example, there is known a technique for determining that an abnormality occurs in a filter when large inconsistency occurs between an amount of PM deposited on the filter (hereinafter also referred to as PM deposit amount), which is calculated on the basis of the differential pressure across the filter, and a PM deposit amount calculated from integration of an amount of PM discharged from an internal combustion engine (hereinafter also referred to as PM discharge amount) estimated from an operation state of the internal combustion engine (see, for example, Japanese Patent Application Laid-open No. 2005-344619).

Incidentally, when the temperature of an exhaust pipe is low, for example, immediately after the internal combustion engine is started, water sometimes condenses in the exhaust pipe. When the condensed water reaches the filter, the PM deposited on the filter sometimes peels. Then, since the differential pressure across the filter decreases, large inconsistency occurs between the PM deposit amount calculated on the basis of the differential pressure across the filter and the PM deposit amount calculated by the integration of the PM deposit amount estimated from the operation state of the internal combustion engine. Therefore, it is likely that accuracy of abnormality determination for the filter is deteriorated.

### PRECEDING TECHNICAL DOCUMENTS

### Patent Documents:

Patent Document 1: JP2005-344619A;
Patent Document 2: JP2005-207240A;
Patent Document 3: JP2007-292013A.

### SUMMARY OF THE INVENTION

### Task to Be Solved by the Invention:

The present invention has been devised in view of the problems explained above and it is an object of the present invention to further improve abnormality determination accuracy for a filter.

### Solution for the Task:

In order to attain the object, the present invention provides a filter abnormality determining device including: a filter provided in an exhaust passage of an internal combustion engine and configured to collect particulate matters in exhaust gas; a discharge amount estimating unit configured to estimate an amount of the particulate matters discharged from the internal combustion engine; a sensor, the detection value of which changes according to an amount of the particulate matters deposited on the filter; a determining unit configured to determine an abnormality of the filter on the basis of the detection value of the sensor; and a permitting unit configured to permit the determination performed by the determining unit when an integrated value of the amount of the particulate matters estimated by the discharge amount estimating unit from a start time of the internal combustion engine is equal to or larger than a threshold.

At the start time of the internal combustion engine, the PM sometimes peels from the filter because of condensed water. In this case, the detection value of the sensor greatly changes. However, even if the PM peels from the filter, if the operation of the internal combustion engine continues thereafter, PM discharged from the internal combustion engine anew is deposited on the filter. When the operation of the internal combustion engine is continued, condensed water is not generated because the temperature of an exhaust pipe rises. Therefore, if a sufficient time elapses from the start time of the internal combustion engine, PM is deposited on the filter. If abnormality determination for the filter is carried out after such a state, the influence due to the condensed water can be reduced. That is, even if the PM peels from the filter because of the condensed water, if this is after an amount of the PM necessary for the abnormality determination for the filter is discharged from the internal combustion engine, accuracy of the abnormality determination for the filter is improved. In this way, deterioration in the accuracy can be suppressed by carrying out the abnormality determination after a sufficient amount of the PM is discharged from the internal combustion engine.

The threshold can be set to a lower limit value of an integrated value of the PM discharge amount at which the abnormality determination for the filter can be performed. The threshold can be set to a value with which, if the filter is normal, it is determined that the filter is normal when an abnormality of the filter is determined on the basis of the determination value of the sensor. Further, the threshold can also be determined according to determination accuracy and a determination frequency determined by a law or the like.

The sensor is not limited to a differential pressure sensor and may be a sensor that detects a PM amount downstream of the filter (hereinafter referred to as PM sensor). The determining unit may carry out the abnormality determination by, for example, comparing the detection value of the sensor and the threshold. Alternatively, the determining unit may carry out the abnormality determination by comparing a PM deposit amount estimated from the detection value of the sensor and a PM deposit amount calculated from the PM discharge amount estimated by the discharge amount estimating unit. That is, the determining unit may determine an abnormality of the filter using only the detection value of the sensor or may determine an abnormality of the filter using the detection value of the sensor and an estimated value estimated by the discharge amount estimating unit.

The start time of the internal combustion engine may be set to a point in time when the internal combustion engine starts actuation (a point in time when a crankshaft of the internal combustion engine starts rotation) or a point in time when the number of revolutions of the internal combustion engine rises to the number of revolutions during idling. The start time of the internal combustion engine may be set to a point in time when some action for starting the internal combustion engine is performed or a point in time when the number of revolutions of the internal combustion engine is larger than 0. The integrated value may be set to a total amount of particulate matters discharged from the internal combustion engine from the start of actuation of the internal combustion engine to the present point. The abnormality of the filter includes removal of the filter besides breaking of the filter and erosion of the filter.

In the present invention, the filter abnormality determining device can include a deposit amount estimating unit configured to estimate an amount of the particulate matters deposited on the filter. The permitting unit can permit the determination performed by the determining unit when the amount of the particulate matters estimated by the deposit amount estimating unit is equal to or smaller than a threshold and when the integrated value of the amount of the particulate matters estimated by the discharge amount estimating unit from the start time of the internal combustion engine is equal to or larger than the threshold.

The deposit amount estimating unit can estimate the amount of the particulate matters deposited on the filter without using the detection value of the sensor. For example, the deposit amount estimating unit may estimate the amount of the particulate matters deposited on the filter on the basis of the amount of the particulate matters estimated by the discharge amount estimating unit. The deposit amount estimating unit may estimate a PM deposit amount obtained when it is assumed that the peeling of the PM from the filter due to the condensed water does not occur. The PM amount estimated by the deposit amount estimating unit may be considered not decreasing even if the PM peels from the filter because of the condensed water. The estimated PM deposit amount may be a PM deposit amount obtained when it is assumed that the filter is normal, may be a PM deposit amount obtained when it is assumed that an abnormality occurs in the filter, or may be a PM deposit amount obtained when it is assumed that the filter is in a state of a boundary between normal and abnormal.

For example, even if a crack occurs in the filter, PM is deposited on a part where the crack does not occur. Therefore, the detection value of the sensor also changes. When a large amount of PM flows into the filter, a part where the filter is cracked is sometimes closed by the PM. Therefore, when a large amount of PM flows into the filter, the detection value of the sensor indicates that the large amount of PM is deposited on the filter. That is, it is likely that, after the large amount of PM flows into the filter, even if an abnormality occurs in the filter, it is determined that the filter is normal. On the other hand, it is possible to improve the accuracy of the abnormal determination by permitting the abnormality determination only before the abnormality determination for the filter becomes difficult.

The amount of the particulate matters estimated by the deposit amount estimating unit is equal to or smaller than the threshold before the abnormality determination for the filter becomes difficult because the large amount of PM is deposited. The threshold can be set to an upper limit value of the PM deposit amount with which, when an abnormality occurs in the filter, it is possible to determine on the basis of the detection value of the sensor that the abnormality occurs in the filter. When an abnormality occurs in the filter, the threshold may be set to an amount of PM deposited on the filter until the detection value of the sensor reaches a value indicating that the filter is normal.

### EFFECT OF THE INVENTION

According to the present invention, it is possible to further improve the abnormality determination accuracy for the filter.

### BRIEF DESCRIPTION OF THE DRAWINGS

FIG. 1 is a diagram showing the schematic configuration of an internal combustion engine and an exhaust system for the internal combustion engine according to an embodiment;
FIG. 2 is a diagram showing a relation between an integrated value of an amount of PM flowing into a filter (a filter inflow PM amount) and a differential pressure across the filter;
FIG. 3 is a time chart showing transitions of an estimated value of a PM deposit amount, an integrated value of a PM discharge amount from an engine start time, and a differential pressure across the filter; and
FIG. 4 is a flowchart for explaining a flow of abnormality determination for the filter according to the embodiment.

### MODE FOR CARRYING OUT THE INVENTION

A mode for carrying out the present invention is illustratively explained in detail below on the basis of an embodiment with reference to the drawings. However, dimensions, materials, shapes, relative arrangements, and the like of components described in the embodiment do not mean to limit the scope of the present invention to only the dimensions, the materials, the shapes, the relative arrangements, and the like unless specifically noted otherwise.

### Embodiment

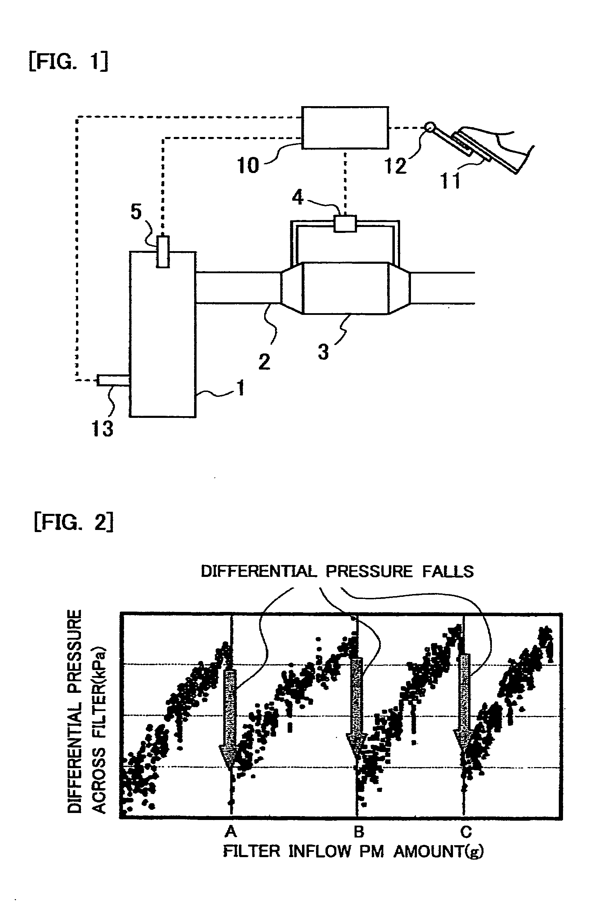

FIG. 1 is a diagram showing the schematic configuration of an internal combustion engine and an exhaust system for the internal combustion engine according to an embodiment. An internal combustion engine 1 shown in FIG. 1 is a diesel engine including four cylinders. This embodiment can be applied to a gasoline engine as well.

An exhaust passage 2 is connected to the internal combustion engine 1. A filter 3 configured to collect particulate matters (hereinafter referred to as PM) in exhaust gas is provided halfway in the exhaust passage 2. The filter 3 includes, for example, a plurality of passages extending in parallel to one another. The passages are configured by a passage, the upstream end of which is closed by a stopper and a passage, the downstream end of which is closed by a stopper. A nonwoven fabric or the like can also be used as the filter 3.

A differential pressure sensor 4 configured to detect a differential pressure between the exhaust passage 2 further on the upstream side than the filter 3 and the exhaust passage 2 further on the downstream side than the filter 3 is attached to the filter 3. The differential pressure sensor 4 detects a differential pressure across the filter 3.

A fuel injection valve 5 configured to inject fuel into a cylinder is provided in the internal combustion engine 1.

An ECU 10, which is an electronic control unit for controlling the internal combustion engine 1, is provided beside the internal combustion engine 1 configured as explained above. The ECU 10 controls the internal combustion engine 1 according to an operation condition of the internal combustion engine 1 or a request of a driver.

Besides the differential pressure sensor 4, an accelerator pedal opening degree sensor 12 configured to output an electric signal corresponding to a step-in amount of an accelerator pedal 11 by the driver and detect an engine load and a crank position sensor 13 configured to detect engine rotational speed are connected to the ECU 10 via electric wires. Output signals of the sensors are input to the ECU 10.

The ECU 10 performs control of an operation state of the internal combustion engine 1 on the basis of input detection values of the sensors input to the ECU 10. For example, the ECU 10 controls a fuel injection amount from the fuel injection valve 5.

The ECU 10 determines an abnormality of the filter 3 on the basis of the detection value of the differential pressure sensor 4. Specifically, the ECU 10 compares a differential pressure across the filter 3 obtained by the differential pressure sensor 4 in a predetermined period and a threshold. If the differential pressure across the filter 3 is equal to or larger than the threshold, the ECU 10 determines that the filter 3 is normal. If the differential pressure across the filter 3 is smaller than the threshold, the ECU 10 determines that the filter 3 is abnormal. The threshold is calculated by an experiment, a simulation, or the like in advance as a lower limit value of the differential pressure across the filter 3 at the time when the filter 3 is normal.

The ECU 10 estimates an amount of PM discharged from the internal combustion engine 1 (hereinafter referred to as PM discharge amount) on the basis of an operation state of the internal combustion engine 1. The ECU 10 estimates an amount of PM deposited on the filter 3 (hereinafter referred to as PM deposit amount) on the basis of an integrated value of the PM discharge amount. The ECU 10 configured to estimate the PM discharge amount in this embodiment is equivalent to the discharge amount estimating unit in the present invention. The ECU 10 configured to estimate the PM deposit amount in this embodiment is equivalent to the deposit amount estimating unit in the present invention.

In this embodiment, all PM discharged from the internal combustion engine 1 may be considered to be deposited on the filter 3. However, PM discharged from the internal combustion engine 1 may be considered to be deposited on the filter 3 at a predetermined rate. In this case, the ECU 10 may calculate the PM deposit amount by multiplying the integrated value of the PM discharge amount with a predetermined value. An optimum value of the predetermined value is calculated by an experiment or a simulation in advance. The PM discharge amount has a correlation with the operation state (the engine rotational speed and the engine load) of the internal combustion engine 1. Therefore, if a relation between the PM discharge amount and the operation state of the internal combustion engine 1 is calculated by an experiment or a simulation in advance and stored in the ECU 10, the ECU 10 can calculate the PM discharge amount on the basis of the operation state of the internal combustion engine 1. The engine load may be a degree of opening and depression of the accelerator pedal or a fuel injection amount. The ECU 10 may calculate the PM deposit amount from the operation state (the engine rotational speed or the engine load) of the internal combustion engine 1.

There is a correlation between the differential pressure across the filter 3 and the PM deposit amount. Therefore, if the differential pressure across the filter 3 is not a value corresponding to the estimated value of the PM deposit amount, it is likely that an abnormality such as a crack occurs in the filter 3 and the differential pressure across the filter 3 is small. In this embodiment, the ECU 10 performs abnormality determination assuming that the differential pressure across the filter 3 in the predetermined period is equal to or larger than the threshold when the filter 3 is normal.

When water in a liquid state flows into the filter 3 or water condenses in the filter 3, PM deposited on the filter 3 sometimes peels from the filter 3. When the PM peels from the filter 3 in this way, the differential pressure across the filter 3 decreases.

FIG. 2 is a diagram showing a relation between an integrated value of an amount of PM flowing into the filter 3 (a filter inflow PM amount) and the differential pressure across the filter 3. The filter inflow PM amount may be considered to be equal to the integrated value of the PM discharge amount. A, B, and C in FIG. 2 are values obtained when the internal combustion engine 1 is stopped for one day.

When the internal combustion engine 1 is stopped, the temperature on the wall surface of the exhaust passage 2 falls and moisture in exhaust gas condenses at the next engine start time. Therefore, condensed water flows into the filter 3. Before the internal combustion engine 1 is stopped, the differential pressure across the filter 3 increases according to an amount of PM flowing into the filter 3. However, every time the internal combustion engine 1 is stopped at A, B, and C in FIG. 2, the differential pressure across the filter 3 decreases. This is because PM peels from the filter 3 because of the condensed water flowing into the filter 3. If an abnormality of the filter 3 is determined when the differential pressure across the filter 3 falls because of the condensed water, wrong determination is caused.

Therefore, in this embodiment, if the filter 3 is normal, the abnormality determination for the filter 3 is carried out when the differential pressure across the filter 3 is sufficiently large.

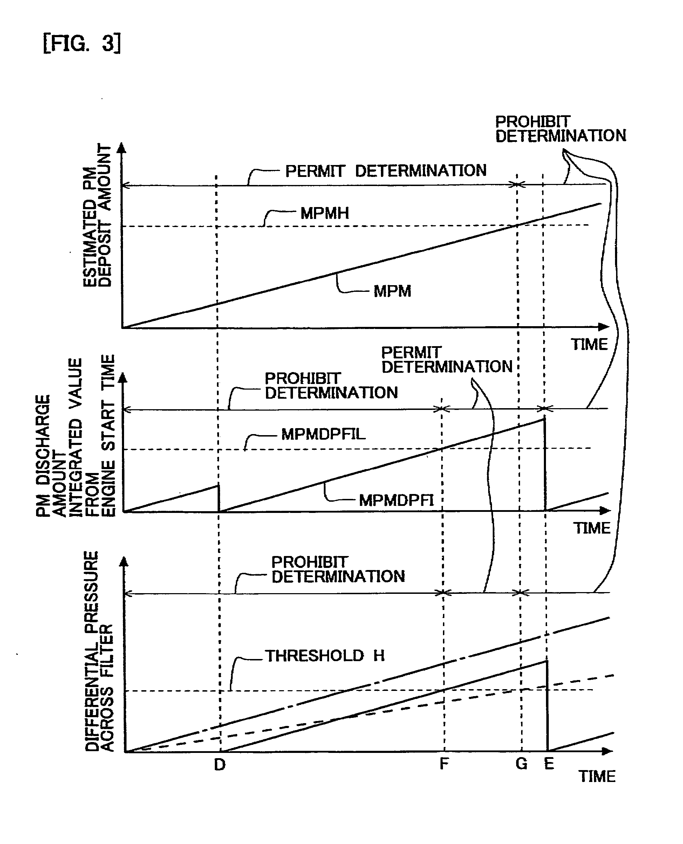

FIG. 3 is a time chart showing transitions of an estimated PM deposit amount, an integrated value of a PM discharge amount from an engine start time, and a differential pressure across the filter 3. FIG. 3 is a diagram abstracted for explanation. The estimated PM deposit amount is a value estimated on the basis of an operation state of the internal combustion engine 1 and is a value obtained when there is no peeling of PM from the filter 3 due to condensed water. "The integrated value of the PM discharge amount from the engine start time" may be "a PM deposit amount calculated from the integrated value of the PM discharge amount from the engine start time".

In FIG. 3, a solid line in the differential pressure across the filter 3 indicates the differential pressure across the filter 3 obtained when the filter 3 is normal and PM peels from the filter 3. An alternate long and short dash line indicates the differential pressure across the filter 3 obtained when the filter 3 is normal and PM does not peel from the filter 3. A broken line indicates the differential pressure across the filter 3 obtained when an abnormality occurs in the filter 3 and PM does not peel from the filter 3. The solid line indicates that the filter 3 is normal and the differential pressure across the filter 3 is the smallest. The broken line indicates that an abnormality occurs in the filter 3 and the differential pressure across the filter 3 is the largest. A point in time when time is 0 may be a point in time when regeneration of the filter 3 is carried out.

The internal combustion engine 1 is stopped at points in time of D and E in FIG. 3. At D and E, the internal combustion engine 1 is stopped for a certain degree of a period such that condensed water is generated. However, the estimated PM deposit amount and the integrated value of the PM discharge amount from the engine start time do not increase or decrease in the period in which the internal combustion engine 1 is stopped. Therefore, transitions of the values in the period in which the internal combustion engine 1 is stopped are omitted in FIG. 3. That is, the abscissa of FIG. 3 can be considered to indicate time in which the internal combustion engine 1 is operating.

The estimated PM deposit amount increases according to the operation state of the internal combustion engine 1. The integrated value of the PM discharge amount from the engine start time is reset every time the internal combustion engine 1 is started. The integrated value of the PM discharge amount increases according to the operation state from the start time of the internal combustion engine 1.

The differential pressure across the filter 3 (the solid line) obtained when the filter 3 is normal and PM peels from the filter 3 falls at the start time of the internal combustion engine 1. On the other hand, the differential pressure across the filter 3 (the alternate long and short dash line) obtained when the filter 3 is normal and PM does not peel from the filter 3 is not affected by the stop and the start of the internal combustion engine 1. The differential pressure across the filter 3 (the broken line) obtained when an abnormality occurs in the filter 3 and PM does not peel from the filter 3 increases as time elapses. However, a degree of the increase is smaller than a degree at which the differential pressure across the filter 3 increases when the filter 3 is normal.

In this embodiment, in a period from F to G in FIG. 3, if the differential pressure across the filter 3 is equal to or larger than a threshold H, it is determined that the filter 3 is normal. If the differential pressure across the filter 3 is smaller than the threshold H, it is determined that an abnormality occurs in the filter 3.

A point in time of F in FIG. 3 is a point in time when the differential pressure across the filter 3 reaches the threshold H when the filter 3 is normal and when a rise of the differential pressure across the filter 3 is the slowest. This is a point in time when an integrated value MPMDPFI of a PM discharge amount from an engine start time reaches a threshold (MPMDPFIL) at which the abnormality determination for the filter 3 is can be performed. The point in time of F may be a point in time when the differential pressure across the filter 3 rises to the threshold H if the filter 3 is normal even if PM peels from the filter 3.

The rise of the differential pressure across the filter 3 is the slowest when PM peels from the filter 3 every time the internal combustion engine 1 is started. The integrated value of the PM discharge amount is reset every time the internal combustion engine 1 is started. Therefore, when the differential pressure across the filter 3 rises on the basis of the integrated value of the PM discharge amount, the rise of the differential pressure across the filter 3 is the slowest.

Assuming that the filter 3 is normal and the time until the differential pressure across the filter 3 reaches the threshold H is the longest in this way, a point in time when the differential pressure across the filter 3 reaches the threshold H in this case is represented as F. The abnormality determination for the filter 3 is permitted after the point in time indicated by F. Consequently, when the filter 3 is normal, the filter 3 is suppressed from being determined as abnormal by mistake.

In a period before the point in time indicated by F, since a PM deposit amount is too small, it is likely that wrong determination is caused if the abnormality determination for the filter 3 is carried out. That is, even when the filter 3 is normal, since PM is not deposited on the filter 3, it is likely that the differential pressure across the filter 3 decreases to be smaller than the threshold H. However, when the filter 3 is normal, time until the differential pressure across the filter 3 increases to be equal to or larger than the threshold H is shorter than time until the differential pressure across the filter 3 increases to be equal to or larger than the threshold H when the filter 3 is abnormal. Therefore, when the filter 3 is normal, the point in time of F is set as a point in time of the start of a period in which the differential pressure across the filter 3 is equal to or larger than the threshold H. The solid line in FIG. 3 indicates a transition of the differential pressure across the filter 3 that occurs when the filter 3 is normal in such a situation in which the differential pressure across the filter 3 less easily rises.

The threshold (MPMDPFIL) at which the abnormality determination for the filter 3 can be performed may be determined according to accuracy of the abnormality determination and a frequency of carrying out the abnormality determination. That is, if the abnormality determination is carried out when the integrated value of the PM discharge amount is large, although the accuracy of the abnormality determination increases, the frequency of carrying out the abnormality determination decreases. When the internal combustion engine 1 is stopped while the ECU 10 is waiting for the integrated value of the PM discharge amount to increase, an opportunity for carrying out the abnormality determination is lost. Therefore, the point in time of F may be changed according to what is given priority. The threshold (MPMDPFIL) can also be determined according to a law or the like.

A point in time of G in FIG. 3 is a point in time when the differential pressure across the filter 3 reaches the threshold H when an abnormality occurs in the filter 3 and when a rise in the differential pressure across the filter 3 is the fastest. This is a point in time when an estimated PM deposit amount MPM reaches a threshold (MPMH), which is an upper limit value at which the abnormality determination for the filter 3 is possible. After the point in time of G, since the PM deposit amount increases, it is likely that wrong determination is caused if the abnormality determination for the filter 3 is carried out. That is, even when an abnormality occurs in the filter 3, it is likely that the differential pressure across the filter 3 increases to be equal to or larger than the threshold H according to collection of PM in the filter 3. However, when an abnormality occurs in the filter 3, time until the differential pressure across the filter 3 increases to be equal to or larger than the threshold H is long. Therefore, when an abnormality occurs in the filter 3, the point in time of G is set as a point in time of the end of a period in which the differential pressure across the filter 3 is smaller than the threshold H.

The rise in the differential pressure across the filter 3 is the fastest when PM does not peel from the filter 3 even if the internal combustion engine 1 is started. Therefore, when the filter 3 is abnormal, the rise in the differential pressure across the filter 3 is the fastest when the estimated PM deposit amount is not reset. Assuming that the filter 3 is abnormal and the time until the differential pressure across the filter 3 reaches the threshold H is the shortest in this way, a point in time when the differential pressure across the filter 3 reaches the threshold H in this case is represented as G. The abnormality determination for the filter 3 is prohibited after the point in time indicated by G. Consequently, when the filter 3 is abnormal, the filter 3 is suppressed from being determined as normal by mistake. The broken line in FIG. 3 indicates a transition of the differential pressure across the filter 3 that occurs when the filter 3 is abnormal in such a situation in which the differential pressure across the filter 3 easily rises.

That is, according to the integrated value MPMDPFI of the PM discharge amount from the engine start time, it is possible to perform the abnormality determination for the filter 3 from the point in time of F until the point in time of E, which is a point in time of the next stop of the internal combustion engine 1. According to the estimated PM deposit amount MPM, it is possible to perform the abnormality determination for the filter 3 from a point in time when the estimated PM deposit amount is 0 until the point in time of G. Both the two conditions are satisfied in a period from F to G. Therefore, the abnormality determination for the filter 3 is carried out in this period. In the period from F to G, when the filter 3 is normal, the differential pressure across the filter 3 is equal to or larger than the threshold H, and when the filter 3 is abnormal, the differential pressure across the filter 3 is smaller than the threshold H.

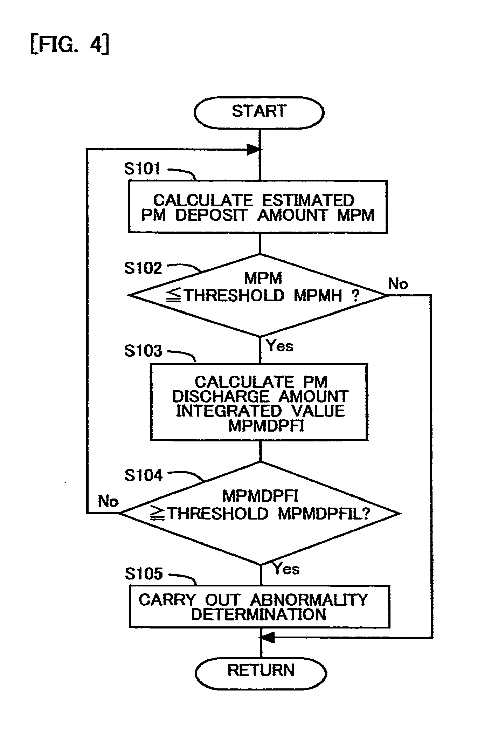

FIG. 4 is a flowchart for explaining a flow of the abnormality determination for the filter 3 according to this embodiment. This routine is repeatedly executed at every predetermined time by the ECU 10.

In step S101, the ECU 10 calculates the estimated PM deposit amount MPM. The estimated PM deposit amount MPM may be set to an integrated value of a PM discharge amount or may be calculated by multiplying the integrated value with a predetermined value. Even if the internal combustion engine 1 is stopped and started or even if PM peels from the filter 3, the estimated PM deposit amount MPM does not change.

In step S102, the ECU 10 determines whether the estimated PM deposit amount MPM is equal to or smaller than the threshold MPMH. An optimum value of the threshold MPMH is calculated by an experiment or a simulation in advance and stored in the ECU 10. When an affirmative determination is made in step S102, the ECU 10 proceeds to step S103. On the other hand, when a negative determination is made in step S102, since it is likely that wrong determination is caused when an abnormality of the filter 3 is determined, the ECU 10 ends this routine.

In step S103, the ECU 10 calculates the integrated value MPMDPFI of the PM discharge amount from the engine start time. The PM discharge amount is calculated according to an operation state of the internal combustion engine 1. The integrated value MPMDPFI of the PM discharge amount can be calculated by integrating the PM discharge amount.

In step S104, the ECU 10 determines whether the integrated value MPMDPFI of the PM discharge amount is equal to or larger than the threshold MPMDPFIL. An optimum value of the threshold MPMDPFIL is calculated by an experiment or a simulation in advance and stored in the ECU 10. The threshold MPMH may be set such that the differential pressure across the filter 3 at the time when the estimated PM deposit amount MPM reaches the threshold MPMH in the abnormal filter 3 is lower than the differential pressure across the filter 3 at the time when the integrated value of the PM discharge amount from the engine start time reaches the threshold MPMDPFIL in the normal filter 3. The thresholds may be changed according to a change in the sensitivity of the differential pressure sensor 4.

When an affirmative determination is made in step S104, the ECU 10 proceeds to step S105. On the other hand, when a negative determination is made in step S104, the ECU 10 returns to step S101.

In step S105, the ECU 10 determines whether an abnormality occurs in the filter 3. In this step, when the differential pressure across the filter 3 is equal to or larger than the threshold H, the ECU 10 determines that the filter 3 is normal. When the differential pressure across the filter 3 is smaller than the threshold H, the ECU 10 determines that an abnormality occurs in the filter 3. An optimum value of the threshold H is calculated by an experiment or a simulation in advance and stored in the ECU 10. The ECU 10 that processes step S105 in this embodiment is equivalent to the determining unit in the present invention. The ECU 10 that processes steps S102 and S104 in this embodiment is equivalent to the permitting unit in the present invention.

As explained above, according to this embodiment, even if PM peels from the filter 3 because of condensed water, the abnormality determination for the filter 3 is not carried out until a sufficient amount of PM is deposited thereafter. Therefore, it is possible to suppress wrong determination from being caused. When a large amount of PM is deposited on the filter 3, in which an abnormality occurs, and the differential pressure across the filter 3 is large, the abnormality determination for the filter 3 is not carried out either. Therefore, it is possible to suppress a wrong determination from being caused. Further, since it is unnecessary to estimate presence or absence of generation of condensed water, it is possible to simplify control and reduce development manhour.

In this embodiment, the filter 3 includes the differential pressure sensor 4 configured to detect the differential pressure across the filter 3. However, instead of the differential pressure sensor 4, the filter 3 may include a PM sensor configured to detect a PM amount downstream of the filter 3. As the PM sensor, for example, a PM sensor in which an electric current flows according to an amount of PM adhering to an electrode is used. A PM amount in exhaust gas can be calculated by reading the magnitude of the electric current. The PM sensor only has to be a PM sensor capable of measuring a PM amount. The PM amount may be an instantaneous value or may be a total amount of PM in a relatively long period. An abnormality of the filter 3 can be determined on the basis of the PM amount downstream of the filter 3.

That is, when an abnormality such as a crack occurs in the filter 3, an amount of PM flowing out from the filter 3 increases. Therefore, the abnormality of the filter 3 can be determined by, for example, comparing the amount of PM flowing out from the filter 3 with a threshold. However, when PM peels from the filter 3, the PM easily passes through the filter 3. Therefore, a detection value of the PM sensor could increase. In this way, besides the abnormality of the filter 3, the detection value of the PM sensor increases because of the peeling of the PM from the filter 3. Therefore, accuracy of the abnormality detection for the filter 3 according to the detection value of the PM sensor could be deteriorated. On the other hand, the deterioration in the determination accuracy can be suppressed by determining an abnormality after a sufficient amount of PM is deposited on the filter 3.

In this embodiment, the PM discharge amount is estimated on the basis of the operation state of the internal combustion engine 1. However, instead of this, a PM sensor may be provided in the exhaust passage 2 upstream of the filter 3 and the PM discharge amount may be detected by the PM sensor.

### PARTS LIST

- 1: Internal combustion engine
- 2: Exhaust passage
- 3: Filter
- 4: Differential pressure sensor
- 5: Fuel injection valve
- 10: ECU
- 11: Accelerator pedal
- 12: Accelerator pedal opening degree sensor
- 13: Crank position sensor

## Claims

1. A filter abnormality determining device comprising:
a filter (3) provided in an exhaust passage (2) of an internal combustion engine (1) and configured to collect particulate matters in exhaust gas;
a discharge amount estimating unit (10) configured to estimate an amount of the particulate matters discharged from the internal combustion engine;
a sensor (4), the detection value of which changes according to an amount of the particulate matters deposited on the filter; and
a determining unit (10) configured to determine an abnormality of the filter on the basis of the detection value of the sensor (4),
**characterized in that** the filter abnormality determining device further comprises:
a permitting unit (10) configured to permit the determination performed by the determining unit when an integrated value of the amount of the particulate matters estimated by the discharge amount estimating unit from a start time of the internal combustion engine is equal to or larger than a threshold.

2. The filter abnormality determining device according to claim 1, further comprising a deposit amount estimating unit (10) configured to estimate an amount of the particulate matters deposited on the filter, wherein
the permitting unit permits the determination performed by the determining unit when the amount of the particulate matters estimated by the deposit amount estimating unit is equal to or smaller than a threshold and when the integrated value of the amount of the particulate matters estimated by the discharge amount estimating unit from the start time of the internal combustion engine is equal to or larger than the threshold.

## Patentansprüche

1. Vorrichtung zur Feststellung einer Filteranomalie, umfassend:
einen Filter (3), der in einem Abgaskanal (2) eines Verbrennungsmotors (1) vorgesehen und dazu ausgelegt ist, Feststoffe in Abgasen aufzufangen,
eine Einheit (10) zum Schätzen der Ausstoßmenge, die dazu ausgelegt ist, eine Menge der von dem Verbrennungsmotor ausgestoßenen Feststoffe zu schätzen,
einen Sensor (4), dessen Ermittlungswert sich gemäß einer Menge von auf dem Filter abgelagerten Feststoffen ändert, und
eine Feststellungseinheit (10), die dazu ausgelegt ist, auf Grundlage des Ermittlungswertes des Sensors (4) eine Filteranomalie festzustellen,
**dadurch gekennzeichnet, dass** die Vorrichtung zur Feststellung einer Filteranomalie ferner umfasst:
eine Freigabeeinheit (10), die dazu ausgelegt ist, die durch die Feststellungseinheit vorgenommene Feststellung freizugeben, wenn ein integrierter Wert der von der Einheit zum Schätzen der Ausstoßmenge geschätzten Feststoffmenge ab einer Startzeit des Verbrennungsmotors gleich einem oder höher als ein Schwellenwert ist.

2. Vorrichtung zur Feststellung einer Filteranomalie nach Anspruch 1, ferner umfassend eine Einheit (10) zum Schätzen der Ablagerungsmenge, die dazu ausgelegt ist, eine auf dem Filter abgelagert Menge an Feststoffen zu schätzen, wobei
die Freigabeeinheit die durch die Feststellungseinheit vorgenommene Feststellung freigibt, wenn die von der Einheit zum Schätzen der Ablagerungsmenge geschätzte Feststoffmenge gleich einem oder kleiner als ein Schwellenwert ist, und wenn der integrierte Wert der von der Einheit zum Schätzen der Ausstoßmenge geschätzten Feststoffmenge ab der Startzeit des Verbrennungsmotors gleich dem oder höher als der Schwellenwert ist.

## Revendications

1. Dispositif de détermination d'anomalie de filtre comportant :
un filtre (3) prévu dans un passage d'échappement (2) d'un moteur à combustion interne (1) et configuré pour collecter des particules dans les gaz d'échappement ;
une unité d'estimation de quantité libérée (10) configurée pour estimer une quantité de particules libérées par le moteur à combustion interne ;
un capteur (4), dont la valeur détectée change en fonction d'une quantité de particules déposées sur le filtre ; et
une unité de détermination (10) configurée pour déterminer une anomalie du filtre sur la base de la valeur détectée par le capteur (4),
**caractérisé en ce que** le dispositif de détermination d'anomalie de filtre comporte en outre :
une unité d'autorisation (10) configurée pour permettre la détermination réalisée par l'unité de détermination quand une valeur intégrée de la quantité de particules estimée par l'unité d'estimation de quantité libérée à partir d'un temps de démarrage du moteur à combustion interne est supérieure ou égale à un seuil.

2. Dispositif de détermination d'anomalie de filtre selon la revendication 1, comportant en outre une unité d'estimation de quantité déposée (10) configurée pour estimer une quantité de particules déposées sur le filtre, dans lequel
l'unité d'autorisation permet la détermination réalisée par l'unité de détermination quand la quantité de particules estimée par l'unité d'estimation de quantité déposée est inférieure ou égale à un seuil et quand la valeur intégrée de la quantité de particules estimée par l'unité d'estimation de quantité libérée à partir du temps de démarrage du moteur à combustion interne est supérieure ou égale au seuil.
